# EUROPÄISCHE PATENTSCHRIFT

(11) **EP 3 915 756 B1**
(45) Veröffentlichungstag und Bekanntmachung des Hinweises auf die Patenterteilung: **17.04.2024**
(21) Anmeldenummer: 21174565.8
(22) Anmeldetag: 19.05.2021
(51) Int. Cl.: B29C 48/00, B29C 48/09, B29C 48/12, B29C 48/90, B26D 3/16, B26D 5/00, B29C 48/92

(54) **ELEKTRONISCHE UNTERSTÜTZUNG ZUM ABLÄNGEN VON PROFILMUSTERN MIT GENAUER ZUORDNUNG DER EXTRUSIONS- UND PRÜFPARAMETER**
ELECTRONIC SUPPORT FOR CUTTING PROFILE PATTERNS TO SIZE WITH ACCURATE ALLOCATION OF EXTRUSION AND TEST PARAMETERS
SUPPORT ÉLECTRONIQUE DESTINÉ AU DÉCOUPAGE DES MOTIFS DE PROFILÉ À AFFECTATION EXACTE DES PARAMÈTRES D'EXTRUSION ET DE VÉRIFICATION

(30) Priorität: 25.05.2020 AT 601632020
(43) Veröffentlichungstag der Anmeldung: 01.12.2021
(73) Patentinhaber: Extrunet GmbH, 4653 Eberstalzell (AT)
(72) Erfinder: KRUMBÖCK, Erwin, 4052 ANSFELDEN (AT); PRAMBERGER, Siegfried, 4655 VORCHDORF (AT)
(74) Vertreter: Babeluk, Michael

(56) Entgegenhaltungen:
- EP-A1- 2 189 057
- EP-A1- 3 372 380
- EP-A2- 1 995 073
- US-A- 5 427 316

## Beschreibung

Die vorliegende Erfindung betrifft ein Verfahren zur Herstellung von Kunststoffprofilen gemäß dem Oberbegriff von Patentanspruch 1.

Dabei wird auf einer Extrusionslinie ein Ausgangsmaterial in einem Extruder plastifiziert und durch eine Extrusionsdüse gepresst, danach in einer Trockenkalibrierung und/oder einer Nasskalibrierung abgekühlt und kalibriert und danach zu einzelnen Profilstangen abgelängt, wobei in der Extrusionslinie ein Beschriftungsgerät enthalten ist.

Der Betrieb einer Extrusionslinie, in der Profile beispielsweise für die Herstellung von Türen und Fenstern erzeugt werden, ist eine technisch sehr anspruchsvolle Aufgabe. Es müssen dabei eine Vielzahl von Parametern überwacht und eingestellt werden, um die Qualität des Profils zu gewährleisten. Diese Aufgabe wird auch dadurch erschwert, dass im Produktionsbetrieb eine Vielzahl von unterschiedlichen Profilen hergestellt werden und die Einstellungen für jede dieser Varianten in der Regel unterschiedlich ist. Dabei kann man nicht unbedingt davon ausgehen, dass eine einmal als günstig ermittelte Konstellation dieser Parameter für ein bestimmtes Profil über längere Zeiträume unverändert gelassen werden kann, da durch Abnützung von Werkzeugen und Änderungen von Umweltbedingungen immer wieder Anpassungen notwendig sind.

Bei der laufenden Extrusion von Fensterprofilen ist es daher üblich, dass in bestimmten Zeitintervallen mehrere Profilmuster entnommen werden, welche dann unterschiedlichen Prüfungen unterworfen werden, um zu gewährleisten, dass die erforderlichen Qualitätsparameter, z.B. laut RAL-Güterichtlinien, eingehalten werden. Diese Prüfungen betreffen die Maßhaltigkeit, Farbe, Oberflächenglanz, Schrumpf, Kugelfalltest u.a. Es ist zweckmäßig, nicht nur die Qualitätsparameter der Profilmuster übersichtlich zu protokollieren und abzuspeichern, sondern auch die Extrusionsparameter, welche genau den Zeitrahmen abdecken, in dem das Profilmuster extrudiert worden ist. Das betrifft die Einstelldaten sowie deren Istwerte für den Extruder und die Extrusionsnachfolge (Extruderdrehzahl, Zylinder- und Düsentemperaturen, Abzugsgeschwindigkeit, Unterdruck in den Trockenkalibratoren und in den Vakuumtanks, Kühlwassertemperaturen, Kühlwasserdurchsatz u.a.) und gemessene Parameter (Massedurchsatz, Schneckendrehmoment, Massetemperatur, diverse Drücke im Zylinder und in der Extrusionsdüse, diverse Temperaturen u.a.). Diese Daten können bei Bedarf später genau analysiert werden, so dass man bei außergewöhnlichen Abweichungen die Ursachen feststellen und Langzeittrends erkennen kann. Die wichtigsten dieser Werte wurden in der Vergangenheit durch das Bedienpersonal erfasst und in einem Protokollblatt vermerkt. Nunmehr werden alle Einstellparameter, deren Istwerte und zusätzlich noch viele weitere Messwerte routinemäßig erfasst und laufend abgespeichert, um im Falle von Störungen rückwirkend mögliche Ursachen auffinden zu können.

Beim Anfahren der Extrusionslinie ist es erforderlich, dass die Bediener alle Einstellparameter, ausgehend von früher bewährten Einstellungen, so einstellen bzw. nachregulieren, damit rasch die erforderlichen Qualitätsparameter des Profils erreicht und eingehalten werden und frühzeitig auf die laufende Produktion umgestellt werden kann. Die Bedienung der Extrusionslinie erfolgt an einem Steuerpult, welches meistens im Düsenbereich des Extruders angeordnet ist. Im Übergangsbereich zwischen Düse und Kalibrierung, beim Austritt der Schmelze aus der Düse und deren Eintritt in die Trockenkalibrierung, liegt ein kritischer Bereich vor, welcher beim Anfahren der Extrusionslinie und beim Optimieren der Einstellparameter eine besondere Beachtung erfordert. Je nach Fortschritt beim Anfahren der Extrusionslinie, auf das hier nicht näher eingegangen wird, werden am Steuerpult Einstelldaten eingegeben und laufend angepasst. Es dauert in der Praxis etwa eine Stunde, bis alle Hohlkammern des Profils ausgebildet und das Profil an allen Kalibrierelementen anliegt, so dass die Profilgeometrie weitgehend ausgebildet ist.

Je nach der Erfahrung des betreffenden Teams wird noch größenordungsmäßig eine weitere halbe Stunde benötigt, bis ein toleranzgerechtes Profil unter Einhaltung der Qualitätsparameter erwartet werden kann. Sobald dieser Zustand erreicht ist, erfolgt die Herstellung von Profilen im Zuge der laufenden Extrusion. Bis dahin werden große Mengen an Ausschuss erzeugt.

Das momentan aus der Düse austretende Profil durchwandert mit der Abzugsgeschwindigkeit die Trocken- und Nasskalibrierung, danach den Raupenabzug und nach einigen Minuten erreicht es die Ablängvorrichtung (Säge oder Cutter). Hier werden die Profilstangen bzw. die Profilmuster abgetrennt, um schließlich auf dem Ablagetisch zu landen und auf diesem eine kurze Zeitspanne zu verweilen. Aus diesem Ablagetisch werden die Profilstangen entweder kontrolliert entnommen und in einen Profilcontainer eingeordnet oder unkontrolliert in einen Ausschuss-Container ausgeworfen. Es ist wichtig, die Profilmuster noch vor dem Ablängen eindeutig zu kennzeichnen, so dass beim Vorhandensein mehrerer Muster auf dem Ablagetisch oder im Ausschuss-Container die Profilmuster gut unterscheidbar sind und deren genaue Vorgeschichte zuordenbar ist.

Eine erste Maßnahme zur Erzielung von Verbesserungen ist es, grundlegende Daten, wie beispielsweise eine Fertigungsauftragsnummer auf das erzeugte Profil aufzubringen, um eine spätere Nachverfolgung zu erleichtern. Eine solche Lösung ist beispielsweise in der DE 20 2019 005 329 U beschrieben.

Es ist in weiterer Folge auch möglich, durch einen auf einem Profilmuster angebrachten Zeitstempel eine Verbindung mit gespeicherten Daten herzustellen, die die verschiedenen Einstellparameter im Zeitablauf abbilden. Dadurch können Zusammenhänge zwischen den eingestellten Werten und der Qualität des Profils abgeleitet werden. Es hat sich jedoch herausgestellt, die auf diese Weise erhaltenen Informationen unzuverlässig und ungenau sind.

Die EP 3 372 380 offenbart einen Tintenstrahldrucker, der es ermöglicht, Informationen auf ein erzeugtes Profil aufzudrucken. Es kann jedoch nicht gewährleistet werden, dass diese Informationen tatsächlich für einen so bezeichneten Profilabschnitt zutreffend sind, wenn sich die betreffenden Parameter zur Zeit der Herstellung des Profilabschnitts geändert haben.

Aufgabe der vorliegenden Erfindung ist es, verbesserte Daten für die Qualitätssicherung zur Verfügung zu stellen, um eine leichtere und bessere Einhaltung der geforderten Qualität zu ermöglichen. Dabei soll auch die Zeitdauer verkürzt werden, innerhalb der beim Anfahren der Extrusionslinie stabil ein den Qualitätsanforderungen entsprechen des Profils erzeugt werden kann.

Erfindungsgemäß werden diese Aufgaben durch die Merkmale von Patentanspruch 1 gelöst.

Wesentlich an dem erfindungsgemäßen Verfahren ist, dass zu beliebigen Zeitpunkten zwischendurch über eine Steuerungseinrichtung das Ablängen von einem oder mehreren Profilmustern angefordert werden kann, wobei auf die Profilmuster charakteristische Informationen zum aktuellen Extrusionsvorgang auf das Profilmuster unter Berücksichtigung der Durchlaufzeit des Profils aufgebracht werden.

Ein erster Aspekt der Erfindung liegt darin, dass es für die Bedienungsmannschaft leicht möglich ist, bei Bedarf ein Profilmuster herzustellen. Als Profilmuster wird dabei ein Profilabschnitt bezeichnet, der typischerweise wesentlich kürzer ist als die im Rahmen der Produktion normalerweise hergestellten Profilabschnitte mit einer Länge von 6 m. Ein solcher Zeitpunkt, zu dem ein Profilmuster hergestellt wird, ist beispielsweise dann geben, wenn ein Einstellparameter deutlich verändert wird und man die Auswirkung dieser Änderung auf das erzeugte Profil dokumentieren möchte.

Ein erfindungswesentlicher Gedanke dabei ist, dass sich solche Änderungen naturgemäß nicht sofort auf das am Ende der Extrusionslinie ausgestoßene Profil auswirken. Vor dem Austritt aus der Düse hat der Kunststoff bereits den Einfülltrichter und den Extruder passiert. Im Extruder wird das Dryblend zu einer Schmelze aufbereitet. Die Geschwindigkeit, mit der das Dryblend bzw. die Schmelze in Extrusionsrichtung durch den Extruder wandert, bestimmt sich aus dem Durchsatz, der Geometrie der Schnecken und der Schneckendrehzahl und ist näherungsweise proportional zur Schneckendrehzahl. Jedem Längsabschnitt des Extruders sind gewisse Extrusionsparameter zuzuordnen (Zylinderheizzonen, Schneckentemperierung, Drehmoment u.a.).

Wenn man beispielsweise die Zusammensetzung des am Extruder aufgegebenen Granulats ändert, dann kann sich eine Änderung erst dann am Produkt zeigen, wenn die durchschnittliche Verweilzeit des Werkstoffs im Extruder und zusätzlich dazu die Zeit vergangen ist, die der Profilstrang benötigt, um von der Extrusionsdüse durch die Kalibrierwerkzeuge bis zum Beschriftungsgerät zu gelangen. Dieses Beschriftungsgerät ist typischerweise zwischen dem Raupenabzug und der Säge bzw. dem Cutter angeordnet. Somit ist diese Durchlaufzeit, die auch Latenzzeit genannt wird, bereits dahingehend zu berücksichtigen, dass das Profilmuster erst dann hergestellt wird, wenn sich die Änderung auf das erzeugte Profil ausgewirkt haben kann, also nach Ablauf der Latenzzeit.

Besonders wichtig ist jedoch, dass auch die relevanten Informationen korrekt auf dem Profilmuster vermerkt werden. Wenn es also um die Zusammensetzung des Rohmaterials geht, dann muss die Information über diejenige Zusammensetzung aufgebracht werden, die zu einem Zeitpunkt aufgegeben worden ist, der um die Latenzzeit, das ist in diesem Fall die Summe aus der durchschnittlichen Verweilzeit des Werkstoffs im Extruder und der Laufzeit des Profilstrang von der Extrusionsdüse bis zum Beschriftungsgerät, vor dem Zeitpunkt liegt, an dem die Information aufgebracht wird.

Wenn es beispielsweise um eine Änderung des Vakuum-Drucks in einem Kalibrierwerkzeug geht, dann muss als Latenzzeit die Laufzeit von diesem Werkzeug bis zum Beschriftungsgerät berücksichtigt werden.

Für die Art der Aufbringung der Informationen stehen verschiedene Möglichkeiten zur Verfügung. So können die Informationen beispielsweise direkt auf den Profilstrang aufgedruckt werden, beispielsweise mit einem Tintenstrahldrucker oder Laserdrucker. Es ist aber auch möglich Klebeetiketten zu verwenden, oder andere Mittel, um die Profilmuster mit den entsprechenden Informationen zu versehen.

Die Informationen selbst können entsprechend einer ersten bevorzugten Ausführungsvariante der vorliegenden Erfindung in Klarschrift aufgebracht werden, d.h., dass die entsprechenden Angaben in Form von Zahlen oder Tabellen aufgebracht werden. Dies ist besonders beim Anfahren einer Extrusionslinie besonders wertvoll, da das Bedienungspersonal sofort die Möglichkeit hat, die relevanten Daten von Profilmuster abzulesen, ohne besondere Lesegeräte, Computer oder dergleichen benötigen. Es ist allerdings aufgrund des verfügbaren Platzes nicht unbeschränkt möglich, Daten im Klartext auf dem Profilmuster zu vermerken.

Es erfordert einiges an Koordination, jedem Profilmuster die genauen Extrusionsparameter zuzuordnen, zumal während der Anfahrphase verschiedene Extrusionsparameter innerhalb kurzer Zeitintervalle verstellt werden. Außerdem sollten die Profilmuster unmittelbar nach dem Abtrennen entnommen und beschriftet werden, damit Verwechslungen mit anderen Mustern, welche innerhalb kurzer Zeitabstände abgelängt worden sind, zu vermeiden. Insbesondere beim Anfahren der Extrusionslinie sind mehrere Bedienpersonen erforderlich, um anhand von Profilmustern die Extrusionsparameter zielgerichtet zu optimieren und die aussagekräftigen Profilmuster bereitzustellen. Werden Muster verwechselt, könnten davon abgeleitete Änderungen diverser Parameter in Hinblick auf eine Optimierung der Profilgeometrie das Ergebnis verschlechtern oder gar zu einem Profilabriss führen, auf alle Fälle wird der Anfahrprozess verlängert. Diese Gefahr kann durch diese Ausführungsvariante der Erfindung deutlich verringert werden.

Entsprechend einer weiteren bevorzugten Ausführungsvariante der vorliegenden Erfindung wird daher auf dem Profilmuster als Information lediglich ein Code aufgebracht, wobei gleichzeitig einen dem Code zugeordneter Datensatz erstellt und gespeichert wird, der die gesamten relevanten Daten enthält, die die Einstellungen und Parameterwerte widerspiegeln, die für das Profilmuster maßgeblich sind. Es kann sich bei diesem Code beispielsweise um einen QR-Code handeln.

Bei modernen Extrusionslinien werden, einem allgemeinen Trend zur Automatisierung der Produktion folgend, immer mehr Extrusionsparameter laufend erfasst und abgespeichert. Diese Werte können ohne nennenswerten Zusatzaufwand auch den Profilmustern zugeordnet werden. Da die laufend erfassten Extrusionsparameter aus Sicht der Produktion nach Tagen oder Wochen üblicherweise gelöscht werden, ist es ratsam, die Daten für die Profilmuster in einer eigenen Datenbank abzuspeichern, welche z.B. der Qualitätssicherung angegliedert ist. Dadurch können beide Abteilungen nach eigenem Ermessen Daten aufbewahren, verwalten, oder löschen.

Damit ist es möglich, die benötigten Profilmuster ohne viel Aufwand des Bedienpersonals zum frühesten, sinnvollen Zeitpunkt zu entnehmen und die diesen zuordenbaren Extrusions- und Qualitätsparameter verwechslungssicher zu protokollieren und für spätere Auswertungen bereitzustellen.

Wird ein Signal zur Profilmusterentnahme gegeben, dann ist der früheste sinnvolle Zeitpunkt zum Entnehmen des Profilmusters meistens unmittelbar nach dem Ablängen einer kompletten Profilstange. Damit wird verhindert, dass unvollständige Stangen produziert werden, welche einen Abfall darstellen und häufig auch manuell aus der Produktionslinie entfernt werden müssten. Zweckmäßig ist es auch, wenn die Steuerungseinrichtung überprüft, ob sich im zeitlichen Nahbereich des Durchlaufens des betreffenden Musters Extrusionsparameter verändert haben, entweder durch das Bedienpersonal oder infolge einer Störgröße. Wird eine relevante Veränderung festgestellt, soll diese Veränderung dem Bediener bekanntgegeben werden und auch, in welchem Zeitabstand eine Profilmusterentnahme ohne absehbare Beeinträchtigung zu erwarten ist. Der Bediener kann dann entscheiden, ob die Musterentnahme später erfolgen soll oder nicht. Um auch im Nachhinein kontrollieren zu können, dass während des Durchlaufens des Profilmusters keine relevanten Veränderungen einzelner Extrusionsparameter vorgekommen sind, beabsichtigt oder unbeabsichtigt, sollen alle erfassten Werte über die gesamte Durchlaufzeit des Profilmusters abgespeichert werden, um bei Bedarf auch im Nachhinein genau auswertbar zu sein.

Als zusätzliche Maßnahme wird vorgeschlagen, zu jedem Profilmuster nicht nur die jeweiligen relevanten Daten unter Berücksichtigung der Durchlaufzeit abzuspeichern, sondern auch alle elektronisch erfassten Extrusionsparameter (Einstellparameter von Extruder, Werkzeug und Nachfolge, deren Istwerte und alle anderen erfassten Messwerte) in einem bestimmten Zeitbereich davor und danach. Innerhalb dieser Zeitspanne von insgesamt etwa 10 min bis 15 min kann später jederzeit überprüft werden, ob bei jedem Extrusionsparameter ein "stationärer Zustand" vorgelegen ist. Wenn nicht, können die Abweichungen bzw. Auswirkungen im Vergleich zum erwarteten Sollzustand eingeschätzt werden. Dabei kann insbesondere darauf geachtet werden, zu welchem Zeitpunkt genau das gegenständliche Profilmuster bzw. deren Schmelze welche Zone bzw. Messstelle passiert hat.

Es ist zweckmäßig, die beiden oben beschriebenen Maßnahmen miteinander zu kombinieren, d.h., dass sowohl Informationen in Klarschrift aufgebracht werden, als auch ein Code, der auf alle anderen erfassten Daten (eindeutige Charakterisierung der eingesetzten Extrusionslinie und des Werkzeuges, alle Extrusionsparameter usw.) verweist, die in einer Datenbank abgespeichert sind. Auf letztere Daten kann mithilfe des Codes zugegriffen werden. Außerdem sollen später an den Profilmustern ermittelte Prüfwerte (Geometrie, mechanische Prüfwerte, Farbwerte etc.) genau den gegenständlichen Prüfmustern zugeordnet werden können, und sollen daher unter dem gleichen Prüfmustercode abgespeichert werden.

Es ist zweckmäßig, die Software für die Steuerungseinrichtung der Profilmusterentnahme, für das Ansteuern des Beschriftungsgerätes und für das Einlesen der Extrusionsparameter im sinnvollen Zeitfenster in einem separaten Software-Modul zusammenzufassen und dieses in die Steuerungseinrichtung der Nachfolge zu integrieren.

In Klarschrift auf dem Profilmuster sollten etwa folgende Übersichtsdaten angegeben werden:
- Datum und Uhrzeit zum Zeitpunkt des Bedruckens;
- Bezeichnung der Extrusionslinie (Nummer);
- Bezeichnung des Werkzeuges (Nummer);
- Fortlaufende Nummerierung des Musters, täglich mit 1 beginnend (oder Anfangsnummer festlegbar);
- Ergänzung der Nummer mit a, b, c, ..., falls mehrere Muster unmittelbar hintereinander entnommen werden;
- Ein kurzer Kommentar (z.B. Zweck des Profilmusters, zuletzt geänderte Einstellparameter, für RAL-Prüfung, oder Ähnliches ...);
- Pfeil zur Kennzeichnung der Extrusionsrichtung;
- Wichtigste Extrusionsparameter (z.B. Extruderdrehzahl und Abzugsgeschwindigkeit, Massedurchsatz, Schmelzedruck, Schmelzetemperatur, Schneckendrehmoment, Vakuumeinstellungen der Trockenkalibrierung und der Vakuumtanks);
- Ergänzende Parameter nach Wahl;
- Profilmustercode zum Aufrufen aller erfassten und abgespeicherten Extrusionsparameter und zugeordneter Prüfwerte.

Die Erfindung betrifft auch eine Vorrichtung zur Herstellung von Kunststoffprofilen gemäß Patentanspruch 8.

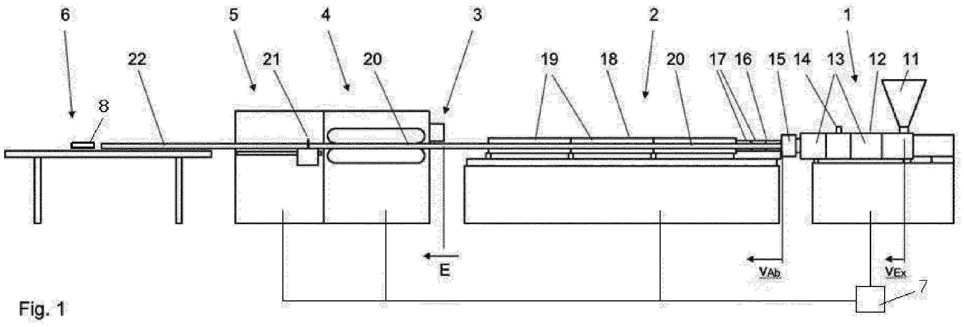

Nachfolgend wird die vorliegende Erfindung anhand eines in einer schematischen Zeichnung dargestellten Ausführngsbeispiels erklärt. Die Figur zeigt anhand einer Extrusionslinie der Vorgang für das Anfordern eines oder mehrerer Profilmuster 8 durch eine Bedienperson, und in der Folge das automatische Ablängen und Beschriften dieser Profilmuster 8.

Die Figur zeigt den prinzipiellen Aufbau einer Extrusionslinie für die Herstellung von Fensterprofilen. Die Erfindung ist jedoch nicht auf Fensterprofile beschränkt, sondern kann auch bei Extrusionslinien für Rohre, technische Profile und ähnliches eingesetzt werden. Im Extruder 1 wird aus dem Dryblend die Schmelze aufbereitet. Das Dryblend wird durch den Trichter 11 dem Extruder zugeführt. Die Schnecken fördern das Kunststoffmaterial von links nach rechts durch den Extruder, wobei über die Schnecken und den beheizten Zylinder 12, hier mit 4 Zylinderheizzonen 13 ausgestattet, Energie zugeführt wird, wobei die Schmelze intensiv gemischt und auf eine Temperatur von etwa 195°C erhitzt wird. Parallel zum Erhitzen wird die Schmelze auf einen Druck von ca. 350 bar gebracht und damit durch die Extrusionsdüse 15 gedrückt. Bei der Entgasungsöffnung 14 werden gasförmige Bestandteile der Rezeptur (Wasserdampf infolge Feuchtigkeit des Dryblends, mitgeschleppte Luft sowie gasförmige Ausscheidungen der Rezeptur infolge des Erhitzens) abgesaugt. Die Fördergeschwindigkeit v_{Ex} in Extrusionsrichtung E hängt vor allem vom Durchsatz, der Schneckengeometrie und der Schneckendrehzahl ab. Die Fördergeschwindigkeit v_{Ex} ist über die Länge des Extruders veränderlich, und sie ist charakteristisch für jede Extrudertype. Der Durchsatz ist in guter Näherung proportional zur Schneckendrehzahl. D.h., um einen gewünschten Durchsatz zu gewährleisten, muss eine bestimmte Schneckendrehzahl eingestellt werden, wodurch eine charakteristische Durchlaufgeschwindigkeit und Verweilzeit des Dryblends bzw. der Schmelze im Extruder, vom Verlassen des Einfülltrichters 11 bis zum Austritt aus der Düse 15, bestimmbar ist.

Im Anschluss an den Extruder befindet sich der Kalibriertisch 2, auf welchem eine Trockenkalibrierung 16 und eine Nasskalibrierung 18 montiert sind. Nach dem Austritt der Schmelze aus der Extrusionsdüse 15 gelangt diese in die Trockenkalibrierung 16, hier bestehend aus drei Trockenkalibratoren 17. Die noch heiße Schmelze entspricht annähernd der Profilkontur und wird durch Unterdruck an die Kalibratorwandung angesaugt und dadurch äußerlich abgekühlt. Zur weiteren Abkühlung durchläuft das Profil 20 noch einige Vakuumtanks 18. In diesen befinden sich in Abständen von 100 mm bis 300 mm zahlreiche Blenden, welche das Profil gegen den Unterdruck in den Vakuumtanks abstützen. Durch direkten Kontakt des Profils 20 mit gekühltem Wasser erfolgt eine weitgehende Abkühlung des Profils. In Abhängigkeit von der Abzugsgeschwindigkeit v_{Ab}, der Außenwanddicken des Profils und der Anzahl der Innenwände sind Längen der Nasskalibrierung bis ca. 18 m üblich.

Der Raupenabzug 4 dient zum Transport des Profils durch die Kalibrierung. Das bereits abgekühlte Profil 20 wird zwischen zwei Raupen eingeklemmt und mit der Abzugsgeschwindigkeit v_{Ab} in Extrusionsrichtung gefördert, wobei typischerweise Abzugskräfte von etwa 3 kN bis 10 kN auftreten.

In der nachfolgenden Ablängvorrichtung 5, hier als Säge 21 ausgeführt, wird das Profil 20 zu üblicherweise 6 m langen Profilstangen 22 abgelängt. Während des Sägevorganges wird das Trennaggregat 21 synchron mit der Abzugsgeschwindigkeit mitbewegt. Die abgelängten Profilstangen 22 werden durch das Profil 20 weiter bis zum Ablagetisch 6 geschoben und in diesem querverschoben. Qualitätsgerechte Profilstangen werden manuell oder mit einer maschinellen Vorrichtung in Profilcontainer ausgelagert, nicht qualitätsgerechte Profile kommen in einen Ausschusscontainer.

Das Profil 20 bewegt sich ab dem Austritt aus der Extrusionsdüse 15 mit der Abzugsgeschwindigkeit v_{Ab} durch die gesamte Nachfolge hindurch bis zum Trennaggregat 21. Während der laufenden Profilextrusion, meistens auch während einer Ausschussproduktion oder während des Anfahrprozesses, werden Profilstangen mit vorgegebener Länge abgetrennt. Der Steuerungseinrichtung "ist stets bekannt", zu welchen Zeitpunkten ein Trennvorgang zu aktivieren ist. Dies gilt auch für manuell ausgelöste Trennvorgänge und auch bei Änderungen der Abzugsgeschwindigkeit und/oder der Extruder-Drehzahl.

Damit man bei der Analyse des Extrusionsvorganges möglichst exakt die "Geschichte" eines bestimmten Profilmusters 8 vom Eintritt des Dryblends in den Extruder bis zum Ablängen des Profilmusters 8 wiedergeben kann, müssen zusätzlich zu den Extrusionsparametern (diverse Einstell- und Messdaten) die charakteristischen Abstände bzw. Längenabmessungen des Extruders, des Werkzeuges, der Nachfolge und des Beschriftungsgerätes bekannt sein. Diese Daten müssen einmalig für die Extrusionslinie und für das Werkzeug eingegeben werden und stehen dann für jedes Fertigungslos des betreffenden Profils zur Verfügung.

Für das Ablängen von einem oder mehreren Profilmustern 8 gibt der Maschinenführer zunächst ein Anforderungssignal ein. Im Dialog mit der Steuerungseinrichtung werden dann weitere Informationen ausgetauscht:
- Anzahl und Längen der angeforderten Profilmuster 8, welche hintereinander entnommen werden sollen;
- Zeitpunkt der Entnahme:
   . sofort = unmittelbar nach dem Eintreffen des sofort bedruckten Profilmusters 8 beim Trennaggregat;
   . nach Fertigstellung der nächsten, vollständigen Profistange 22;
   . nach Durchlaufen der momentan aus der Düse 15 austretenden Schmelze;
   . nach Durchlaufen des momentan dem Extruder 1 zugeführten Dryblends;
   . nach x min Zeitverzögerung;
   . etc;
- Eingabe des aufzudruckenden Kurzkommentars.

Sobald ein Profilmuster 8 angefordert worden ist, ist die Steuerungseinrichtung in Bereitschaft, die auf dem Profilmuster 8 aufzudruckenden Extrusionsparameter und ergänzenden Parameter über einen kurzen Zeitraum vor dem Bedruckungszeitpunkt zu bestimmen, z.B. die Mittelwerte der betreffenden Messwerte über 15 s kurz vor dem Bedrucken zu berechnen.

Sobald diese Informationen bekannt sind, bestimmt die Steuerungseinrichtung 7 den Zeitpunkt des Bedruckens unter Berücksichtigung des Zeitversatzes zwischen Beschriftungsgerät 3 und Schnittposition des Trennaggregates 21. D.h., das Profilmuster 8 wird zuerst an der entsprechenden Profilposition beschriftet (bzw. wird ein Etikett aufgeklebt), so dass die Beschriftung später mit kurzem Sicherheitsabstand hinter der zuerst geschnittenen Stirnfläche des Profilmusters 8 aufscheint. Es ist zweckmäßig, dass alle Profilmuster 8, welche unmittelbar hintereinander herausgeschnitten werden, die gleiche Beschriftung wie das zuerst herausgeschnittene aufweisen.

Parallel zum Beschriften und Ablängen der Profilmuster 8 bestimmt die Steuerungseinrichtung auch, über welchen Zeitrahmen genau die routinemäßig erfassten Extrusionsparameter (alle digital erfassten Einstellparameter und Messwerte der gesamten Extrusionslinie) dem konkreten Profilmuster 8 zuzuordnen sind. Der Endpunkt des zweckmäßigen Zeitrahmens ist der Bedruckungszeitpunkt. Der sinnvolle Beginn des Zeitrahmens ist der Zeitpunkt, zu dem das Dryblend zur Herstellung des konkreten Profilmusters 8 dem Extruder 1 zugeführt worden ist, bevorzugt noch um eine Sicherheitszeitspanne von etwa 3 bis 5 min früher. Die Dauer des Zeitrahmens errechnet sich aus dem Abstand zwischen Beschriftungsgerät und Düse 15 geteilt durch die Abzugsgeschwindigkeit plus der Durchlaufzeit durch den Extruder 1, welche näherungsweise proportional zur Schneckendrehzahl ist. Die Dauer des Zeitrahmens kann daher von der Steuerungseinrichtung automatisch aus den bekannten Größen festgelegt werden. Eine Überprüfung der Richtigkeit kann gelegentlich mittels Einfärbeversuch des Dryblends durchgeführt werden.

Es ist zweckmäßig, alle Daten, die einem bestimmten Profilmuster 8 zuordenbar sind, in einer separaten Datenbank, unabhängig von der Datenbank, in der routinemäßig alle erfassten Extrusionsparameter abgespeichert werden, abzuspeichern und zu verwalten. Das gilt auch für die später an den Prüfmustern 8 vorgenommen Qualitätsprüfungen (z.B. Geometriemaße, mechanische Prüfwerte, Farbmesswerte, usw.). Hierfür ist der auf den Profilmustern 8 standardmäßig aufgedruckte "Profilmustercode" vorgesehen: Alle Daten, die in engem Zusammenhang mit einem bestimmten Profilmuster 8 stehen, werden unter diesem Code abgespeichert und können im Nachhinein mit hoher Genauigkeit analysiert werden. Die Extrusionsparameter haben eine wesentlich bessere Aussagekraft, wenn sie auch später noch auf die Qualität eines zurückbehaltenen Profilmusters 8 bezogen werden können.

## Patentansprüche

1. Verfahren zur Herstellung von Kunststoffprofilen, bei dem auf einer Extrusionslinie ein Ausgangsmaterial in einem Extruder (1) plastifiziert und durch eine Extrusionsdüse (15) gepresst wird, danach in einer Trockenkalibrierung (16) und/oder einer Nasskalibrierung (18) abgekühlt und kalibriert wird und danach zu einzelnen Profilstangen (22) abgelängt wird, und wobei in der Extrusionslinie ein Beschriftungsgerät (3) enthalten ist, wobei zu beliebigen Zeitpunkten zwischendurch über eine Steuerungseinrichtung (7) das Ablängen von einem oder mehreren Profilmustern (8) angefordert werden kann, wobei auf die Profilmuster (8) charakteristische Informationen zum aktuellen Extrusionsvorgang auf das Profilmuster (8) unter Berücksichtigung der Durchlaufzeit des Profils aufgebracht werden,
**dadurch gekennzeichnet, dass** die charakteristischen Informationen zumindest einen Extrusionsparameter umfassen, ausgewählt aus: Extruderdrehzahl, Abzugsgeschwindigkeit, Massedurchsatz, Schmelzedruck, Schmelzetemperatur, Schneckendrehmoment, Vakuumeinstellungen der Trockenkalibrierung und der Vakuumtanks; und
dass die charakteristischen Informationen zumindest teilweise in Klarschrift ausgeführt sind.

2. Verfahren nach Anspruch 1, **dadurch gekennzeichnet, dass** die charakteristischen Informationen aufgedruckt oder in Form von bedruckten Etiketten aufgebracht werden.

3. Verfahren nach einem der Ansprüche 1 oder 2, **dadurch gekennzeichnet, dass** das Profilmuster (8) unmittelbar nach einer kompletten Profilstange oder nach einem anderen Profilmuster (8) hergestellt wird.

4. Verfahren nach einem der Ansprüche 1 bis 3, **dadurch gekennzeichnet, dass** die aufgedruckte Information codiert ist und auf eine gesondert abgespeicherte Datenbank bezogen ist.

5. Verfahren nach einem der Ansprüche 1 bis 4, **dadurch gekennzeichnet, dass** bei der Berücksichtigung der Durchlaufzeit des Profils auch Latenzzeiten eingerechnet werden, die bei der Änderung von Extrusionsparametern auftreten.

6. Verfahren nach einem der Ansprüche 1 bis 5, **dadurch gekennzeichnet, dass** die berücksichtigten Durchlaufzeiten an die Art der Information angepasst sind.

7. Verfahren nach einem der Ansprüche 1 bis 6, **dadurch gekennzeichnet, dass** aufgebrachten Informationen, am Extruder (1) aufgegebene Materialzusammensetzungen, Temperaturen in der Extrusionsdüse (15) oder Drücke in den Kalibrierwerkzeugen (17, 18, 19) umfassen.

8. Vorrichtung zur Herstellung von Kunststoffprofilen, bei dem auf einer Extrusionslinie mit einem Extruder (1) plastifiziert, in dem ein Ausgangsmaterial durch eine Extrusionsdüse (15) gepresst wird, mit einer Trockenkalibrierung (16) und/oder einer Nasskalibrierung (18) und einer Einrichtung zum Ablängen von einzelnen Profilstangen (22), sowie mit einem Beschriftungsgerät, **dadurch gekennzeichnet, dass** eine Steuerungseinrichtung (7) vorgesehen ist, über die das Ablängen von einem oder mehreren Profilmustern (8) angefordert werden kann, und die mit dem Beschriftungsgerät (3) in Verbindung steht, wodurch auf jedem Profilmuster (8) charakteristische Informationen zum aktuellen Extrusionsvorgang auf das Profilmuster (8) zumindest teilweise in Klarschrift unter Berücksichtigung der Durchlaufzeit des Profils aufgebracht werden, wobei die charakteristischen Informationen zumindest einen Extrusionsparameter umfassen, ausgewählt aus: Extruderdrehzahl, Abzugsgeschwindigkeit, Massedurchsatz, Schmelzedruck, Schmelzetemperatur, Schneckendrehmoment, Vakuumeinstellungen der Trockenkalibrierung und der Vakuumtanks.

9. Vorrichtung nach Anspruch 8, **dadurch gekennzeichnet, dass** die Steuerungseinrichtung (7) für die Beschriftung in eine globale Steuerungseinrichtung für die Extrusionslinie integriert ist.

10. Vorrichtung nach einem der Ansprüche 8 oder 9, **dadurch gekennzeichnet, dass** das Beschriftungsgerät (3) als Drucker ausgebildet ist.

11. Vorrichtung nach einem der Ansprüche 8 bis 10, **dadurch gekennzeichnet, dass** das Beschriftungsgerät (3) unmittelbar stromabwärts von einem Raupenabzug (4) angeordnet ist.

## Claims

1. Method for producing plastic profiles, in which, on an extrusion line, a starting material is plasticized in an extruder (1) and is pressed through an extrusion die (15), then is cooled and calibrated in a dry calibration (16) and/or a wet calibration (18), and thereafter is cut to length to form individual profile rods (22), and wherein a labelling device (3) is included in the extrusion line, wherein the cutting to length of one or more profile samples (8) can be requested intermittently at any point in time by way of a control device (7), wherein, on the profile samples (8), characteristic information relating to the current extrusion process is applied to the profile sample (8), taking into account the transit time of the profile,
**characterised in that** the characteristic information comprises at least one extrusion parameter selected from: extruder speed, draw-off speed, melt throughput, melt pressure, melt temperature, screw torque, vacuum settings of the dry calibration and the vacuum tanks; and
**in that** the characteristic information is executed at least partially in plain text.

2. Method according to claim 1, **characterised in that** the characteristic information is printed thereon or is applied in the form of printed labels.

3. Method according to any one of claims 1 or 2, **characterised in that** the profile sample (8) is produced immediately after a complete profile rod or after another profile sample (8).

4. Method according to any one of claims 1 to 3, **characterised in that** the printed information is coded and relates to a separately stored database.

5. Method according to any one of claims 1 to 4, **characterised in that** latency times, which occur when changing extrusion parameters, are also included when taking into account the transit time of the profile.

6. Method according to any one of claims 1 to 5, **characterised in that** the transit times taken into account are adapted to the type of information.

7. Method according to any one of claims 1 to 6, **characterised in that** the applied information comprises material compositions fed to the extruder (1), temperatures in the extrusion die (15), or pressures in the calibration tools (17, 18, 19).

8. Apparatus for producing plastic profiles, in which, on an extrusion line, plasticization takes place using an extruder (1), in which a starting material is pressed through an extrusion die (15), comprising a dry calibration (16) and/or a wet calibration (18), and comprising a device for cutting individual profile rods (22) to length, and comprising a labelling device, **characterised in that** a control device (7) is provided, by way of which the cutting to length of one or more profile samples (8) can be requested, and which is connected to the labelling device (3), whereby on each profile sample (8) characteristic information on the current extrusion process is applied to the profile sample (8) at least partially in plain text, taking into account the transit time of the profile, wherein the characteristic information comprises at least one extrusion parameter selected from: extruder speed, draw-off speed, melt throughput, melt pressure, melt temperature, screw torque, vacuum settings of the dry calibration and the vacuum tanks.

9. Apparatus according to claim 8, **characterised in that** the control device (7) for the labelling is integrated in an overall control device for the extrusion line.

10. Apparatus according to any one of claims 8 or 9, **characterised in that** the labelling device (3) is configured as a printer.

11. Apparatus according to any one of claims 8 to 10, **characterised in that** the labelling device (3) is arranged immediately downstream of a caterpillar take-off (4).

## Revendications

1. Procédé de fabrication de profilé en matière plastique selon lequel sur une ligne d'extrusion, on plastifie une matière de départ dans une extrudeuse (1) et on la presse à travers une buse d'extrusion (15) puis on la refroidit dans un calibreur à sec (16) et/ou un calibreur humide (18) et on calibre et ensuite on coupe à la longueur en barre profilée (22), et
la ligne d'extrusion comporte un appareil d'inscription (3), et à des instants quelconques entretemps avec une installation de commande (7) on peut demander la coupe à la longueur d'un ou plusieurs motifs de profilé (8), les motifs de profilé (8) recevant des informations caractéristiques de l'opération d'extrusion en cours sur le motif de profilé (8) en tenant compte du temps de passage du profilé,
procédé **caractérisé en ce que**
les informations caractéristiques comprennent au moins un paramètre d'extrusion choisi parmi : vitesse de rotation de l'extrudeuse, vitesse d'extraction, débit massique, pression de fusion, température de fusion, couple de la vis, réglage du vide du calibrage à sec et du réservoir de vide, et
- les informations caractéristiques sont effectuées au moins en partie en écriture en clair.

2. Procédé selon la revendication 1,
**caractérisé en ce que**
on imprime les informations caractéristiques ou on les applique sous la forme d'étiquette imprimée.

3. Procédé selon l'une des revendications 1 ou 2,
**caractérisé en ce que**
l'on réalise le motif de profilé (8) directement après une barre profilée complète ou après un autre motif de profilé (8).

4. Procédé selon l'une des revendications 1 à 3,
**caractérisé en ce que**
l'information imprimée est codée et se réfère à une banque de données enregistrée séparément.

5. Procédé selon l'une des revendications 1 à 4,
**caractérisé en ce que**
en tenant compte du temps de passage du profilé on prend également en compte les temps de latence qui se produisent lors des modifications des paramètres d'extrusion.

6. Procédé selon l'une des revendications 1 à 5,
**caractérisé en ce que**
les temps de passage pris en compte sont adaptés à la nature de l'information.

7. Procédé selon l'une des revendications 1 à 6,
**caractérisé en ce que**
les informations appliquées comprennent les compositions de matières appliquées à l'extrudeuse (1), les températures dans la buse d'extrusion (15) ou des pressions dans les outils de calibrage (17, 18, 19).

8. Dispositif de fabrication de profilés en matière plastique selon lequel on plastifie sur une ligne d'extrusion avec une extrudeuse (1) dans laquelle on presse la matière de départ à travers une buse d'extrusion (15), avec un calibrage à sec (16) et/ou un calibrage humide (18) et une installation pour couper à la longueur les différentes barres profilées (22) ainsi qu'avec un appareil d'inscription,
dispositif **caractérisé en ce qu'**il est prévu
une installation de commande (7) par laquelle on demande la coupe à la longueur d'un ou plusieurs motifs de profilé (8) et qui est en liaison avec l'appareil d'inscription (3), de sorte que sur chaque motif de profilé (8) on a les informations caractéristiques de l'opération d'extrusion actuelle sur le motif de profilé (8), au moins en partie en écriture en clair en tenant compte du temps de passage du profilé, les informations caractéristiques comprenant au moins un paramètre d'extrusion choisi parmi : vitesse de rotation de l'extrudeuse, vitesse de sortie, débit massique, pression de fusion, température de fusion, couple de la vis, réglage du vide du calibrage à sec et du réservoir sous vide.

9. Dispositif selon la revendication 8,
**caractérisé en ce que**
l'installation de commande (7) est intégrée dans une installation de commande globale pour l'inscription dans la ligne d'extrusion.

10. Dispositif selon l'une des revendications 8 ou 9,
**caractérisé en ce que**
l'appareil d'inscription (3) est une imprimante.

11. Dispositif selon l'une des revendications 8 à 10,
**caractérisé en ce que**
l'appareil d'inscription (3) est directement en aval de la chenille d'extraction (4).
